# FASCICULE DE BREVET EUROPEEN

(11) **EP 1 592 630 B1**
(45) Date de publication et mention de la délivrance du brevet: **07.06.2006**
(21) Numéro de dépôt: 04707557.7
(22) Date de dépôt: 03.02.2004
(51) Int. Cl.: B65G 47/14

(54) **DISPOSITIF D'ORIENTATION DE PRÉFORMES DE BOUTEILLES**
AUSRICHTUNGSVORRICHTUNG FÜR FLASCHENVORFORMEN ZUR HINDURCHFÜHRUNG DURCH EINE BLASMASCHINE
ORIENTATION DEVICE FOR BOTTLE PREFORMS FOR PASSING THROUGH A BLOWING MACHINE

(30) Priorité: 03.02.2003 FR 0301178
(43) Date de publication de la demande: 09.11.2005
(73) Titulaire: Newtec International Group (SA), 13790 Rousset (FR)
(72) Inventeur: HERMIER, Frédéric, F-13006 Marseille (FR)
(74) Mandataire: Guareschi, Antonella
(86) Numéro de dépôt international: PCT/FR2004/000241
(87) Numéro de publication internationale: WO 2004/069700

(56) Documents cités:
- EP-A- 0 578 602
- WO-A-02/36466
- FR-A- 2 556 273
- US-A- 4 130 194
- US-A- 4 928 808
- US-A- 4 979 607

## Description

La présente invention a pour objet un dispositif d'orientation de préformes de bouteilles destinées à passer dans une machine de soufflage.

Il concerne le domaine industriel et commercial de la fabrication et de la diffusion des bouteilles en matière plastique, notamment en polyéthylène, destinées à contenir des liquides de nombreux types et en particulier des boissons telles que eaux minérales ou sodas (voir p.e. le document US-A-4130194).

Les bouteilles en matière synthétique sont fabriquées essentiellement de deux manières différentes :
- Par extrusion-soufflage ("cycle chaud"). La matière ramollie par chauffage est mise en forme dans un moule, le tout se déroulant en une opération continue sur une installation unique.
- Par injection-soufflage ("cycle froid").

Le second procédé nécessite deux interventions qui peuvent se dérouler en des lieux distincts. Tout d'abord une préforme de dimension réduite est réalisée par injection, puis refroidie et stockée. La préforme est ensuite chauffée à nouveau puis amenée à sa forme définitive par soufflage dans un moule approprié.

La technique selon l'invention s'applique à ce second procédé et est destinée à alimenter les souffleuses de bouteilles fonctionnant suivant le système du "cycle froid".

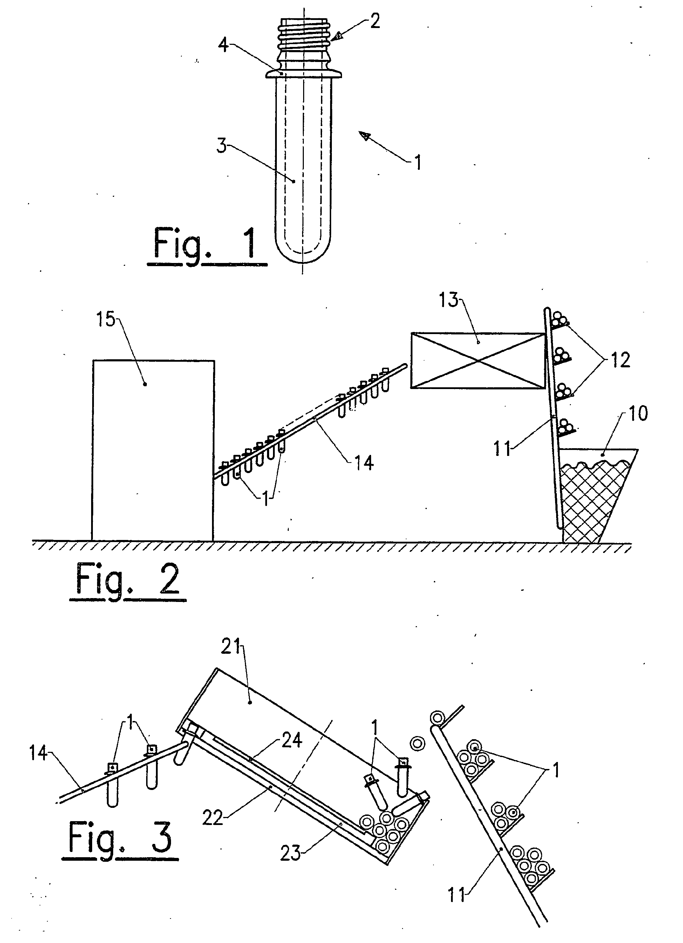

Les préformes 1 (figure 1) produites par injection sur presses ont les caractéristiques suivantes :
- Le col 2 (qui sera le col de la bouteille) est définitivement formé dès l'injection.
- Le corps 3, qui après soufflage sera le corps de la bouteille, se présente sous la forme d'un tube bouché à l'extrémité opposé du col, dont l'épaisseur est variable en fonction du poids de la bouteille à obtenir.
- Elles comportent une collerette 4, d'un diamètre supérieur à celui du corps 3, nécessaire pour l'opération de soufflage de manière à maintenir la préforme 1 dans le moule durant l'opération de transformation de la préforme en bouteille.

En outre, le poids du corps de la majorité des préformes 1 utilisées actuellement est supérieur au poids du col 2 (collerette 4 incluse), ce qui fait que par rapport à un axe perpendiculaire à celui de la préforme et passant par la collerette, la préforme s'orientera naturellement, par gravité, avec le col en haut.

La présente invention a pour objet d'assurer l'orientation d'objets tels que les préformes, et en particulier des préformes en polyéthylène (PET) dont les caractéristiques répondent scrupuleusement aux caractéristiques ci-dessus, ce qui correspond à la quasi totalité des applications industrielles.

Les machines de soufflage - ou souffleuses - pour bouteilles en polyéthylène dites "à cycle froid", fonctionnent avec un système d'alimentation en préformes.

Ces préformes, pour être introduite dans la souffleuse, doivent être organisées à partir de vrac généralement constitué à la sortie des presses d'injection fabriquant les préformes.

Une opération particulièrement délicate consiste, en partant de préformes en vrac, à les orienter correctement pour les accumuler sur le dispositif, en général un rail, alimentant la souffleuse, cette dernière fonctionnant à une cadence pouvant atteindre jusqu'à 50 000 bouteilles/heure.

Sur ce rail les préformes sont donc suspendues par la collerette, le col en haut et se touchent les unes aux autres.

Les systèmes existants à ce jour sont en majorité composés (figure 2):
- D'une trémie 10 recevant les préformes 1 en vrac.
- D'une bande élévatrice 11 avec tapis à tasseaux 12 permettant d'élever les préformes en petits tas et de les déverser dans le système d'orientation 13 des préformes situé en hauteur (permet après orientation de les libérer sur une rampe faisant office d'accumulation).
- D'une rampe inclinée ou rail 14 qui à deux fonctions, celle de générer une accumulation de préformes et également, par son inclinaison, de créer de la poussée à l'entrée de souffleuse 15 par la gravité.

Le système d'orientation 13 est constitué de deux rouleaux parallèles motorisés tournant en sens inverse l'un par rapport à l'autre et inclinés par rapport au sol dans leur longueur.

L'écartement entre les rouleaux, réglable pour pouvoir passer différents types de préformes, est calculé pour laisser passer le corps 3 de la préforme 1 mais pas la collerette 4.

Les préformes sont déversées en haut des rouleaux par la bande élévatrice 11, glissent à l'intérieur des deux rouleaux et petit à petit par gravité passent dans l'écartement des rouleaux et se retrouvent suspendues par la collerette.

L'inclinaison des deux rouleaux permet aux préformes orientées de se déplacer vers le rail 14.

En fin de rouleaux, il est indispensable d'avoir un système, en général une roue démêleuse, pour renvoyer en haut des rouleaux les préformes mal orientées ou posées sur les préformes déjà orientées.

La roue démêleuse pénalise très fortement la cadence car lorsqu'elle rejette vers le haut les préformes non positionnées dans les rouleaux elle emmènent également des préformes déjà bien positionnées et cela bloque également les préformes qui sont en cours de positionnement.

Pour pallier à ce problème les rouleaux atteignent des longueurs considérables.

La régularité de l'alimentation est très mauvaise à savoir que l'on est incapable d'avoir en sortie de rouleaux un nombre constant de préformes bien orientées.

Plus le nombre de préformes amenées au haut des rouleaux est important, plus il y a au niveau de la roue démêleuse de préformes mal orientées et plus la cadence chute. C'est donc un difficile dosage à obtenir entre vitesse du tapis élévateur, inclinaison des rouleaux et leur longueur (plus ils sont longs mieux fonctionne le système).

Le manque de régularité oblige à rallonger d'une manière importante le rail 14 en sortie des rouleaux afin d'avoir un tampon suffisant pour ne pas arrêter l'alimentation en préformes de la souffleuse 15.

De plus, le système ne peut en aucun cas fonctionner à vitesse variable.

L'ensemble de ces dysfonctionnements nécessite une rampe d'alimentation (rail 14) dont la longueur devient très importante pour les grandes cadences, ce qui a pour résultat de devoir placer le système d'orientation 13 à plusieurs mètre au-dessus du sol rendant toute intervention très difficile en cas de blocage (ce qui est malheureusement assez fréquent).

L'encombrement au sol n'est pas en rapport avec la fonction à assurer et l'implantation du système ne présente aucune souplesse.

Enfin, même si lé système dans son ensemble fonctionne, il est aujourd'hui une des raisons majeures d'arrêt de production par sa mauvaise régularité et du fait que l'on laisse les préformes s'orienter naturellement sans forcer le processus, ce qui rend leur orientation totalement aléatoire.

Le dispositif selon la présente invention a pour objectif de remédier à ces inconvénients. Il permet en effet d'augmenter la régularité et le rendement global de la ligne en ne créant jamais de manque de préformes dans le rail 14, grâce en particulier à la suppression des arrêts liés aux systèmes traditionnels.

De plus, cette régularité permet de diminuer la zone tampon d'alimentation de la souffleuse et par la même de réduire la longueur nécessaire du rail incliné et donc la hauteur totale du système. Outre les avantages en terme d'ergonomie, ceci permet d'assurer avec beaucoup plus de précision et de fiabilité le réglage d'écartement des rails sur une courte distance. On évitera ainsi bon nombre de blocages liés à l'imprécision de ce réglage sur des rails de grandes longueurs.

Cette hauteur est encore réduite par le fait que, contrairement aux systèmes à rouleaux, le chargement se fait au point bas du système et non au point haut ce qui permet une accessibilité totale.

La fiabilité et surtout la régularité du système sont largement améliorées du fait d'une orientation des préformes en deux phases bien distinctes, la seconde phase ne laissant qu'une seule possibilité ; le basculement de la préforme isolée vers le rail de sortie.

A la sortie du système d'orientation, la référence en hauteur sous collerette des préformes orientées est constante quel que soit le type de préforme (changement d'outillage). Ceci rend d'autant plus simple et donc plus fiable la zone de jonction avec le rail 14 alimentant la machine de soufflage. Dans le cas des systèmes traditionnels à rouleaux, le réglage d'écartement de ceux-ci se traduit par une variation de la hauteur de sortie des préformes, ce qui complexifie beaucoup le système de jonction avec le rail et cause donc une grosse proportion des problèmes de coincement.

Enfin l'encombrement au sol est réduit de façon importante et la maintenance rendue beaucoup plus aisée.

Dans certains cas, le concept permet d'envisager la suppression du tapis élévateur, le chargement du système s'effectuant à la hauteur de la trémie.

Ce dispositif est constitué d'un système mobile incliné comportant à sa périphérie des alvéoles déterminées pour contenir chacune une préforme en position couchée, ce plateau tournant au-dessus d'une structure plane de glissement également inclinée munie sur tout son pourtour d'un capotage et pourvue à sa partie haute d'une fente oblongue disposée sous les alvéoles et agencée pour provoquer le basculement des préformes en position verticale avec le col en haut, avant de les faire tomber sur la rampe inclinée d'alimentation de la souffleuse.

Sur les dessins annexés, donnés à titre d'exemple non limitatif d'une forme de réalisation conforme à la présente demande :
la figure 1, déjà mentionnée, représente une préforme vue de côté,
la figure 2, également mentionnée ci-avant, est le schéma d'une installation d'alimentation en préformes d'une souffleuse de bouteilles,
la figure 3 est un schéma de principe montrant l'agencement des composants du système d'orientation de préformes selon l'invention,
la figure 4 est une vue de dessus du système d'orientation des préformes
et la figure 5 est une coupe schématique axiale de ce système.

Le dispositif, figures 3 à 5, est conçu pour l'alimentation en préformes 1 de machines de soufflage destinées à traiter des préformes à collerette 4 ayant un centre de gravité situé au dessous de la collerette et dont le diamètre du corps 3 est inférieur à celui de cette dernière (figure 1).

Il est constitué d'un réceptacle 21 cylindrique fixe dont le fond est constitué d'une plaque de glissement 22 circulaire au-dessus de laquelle deux disques superposés tournent en sens inverse, un plateau rotatif 23 et un disque supérieur 24 de diamètre plus faible.

Le bord du plateau 23 dépassant le disque supérieur 24 est muni d'alvéoles 25 qui correspondent à la longueur de la préforme 1. Ces alvéoles sont dimensionnées de manière pouvoir contenir une préforme mais pas deux. Leur hauteur est inférieur au diamètre du corps 3 de la préforme.

La plaque de glissement 22 est munie d'une fente oblongue 26 sur un secteur d'arc d'environ 90°. Cette fente a deux largeurs: une première largeur L1 inférieure au diamètre de la collerette mais supérieure au diamètre du corps 3 de la préforme de façon à laisser passer le corps de la préforme mais pas la collerette, et une seconde largeur L2 bien supérieure au diamètre de la collerette. Cette deuxième largeur permet donc de laisser passer toute la préforme.

La plaque de glissement 22 circulaire est munie sur tout son pourtour d'un capotage 27 afin qu'aucune préforme ne puisse tomber à l'extérieur des disques 23, 24.

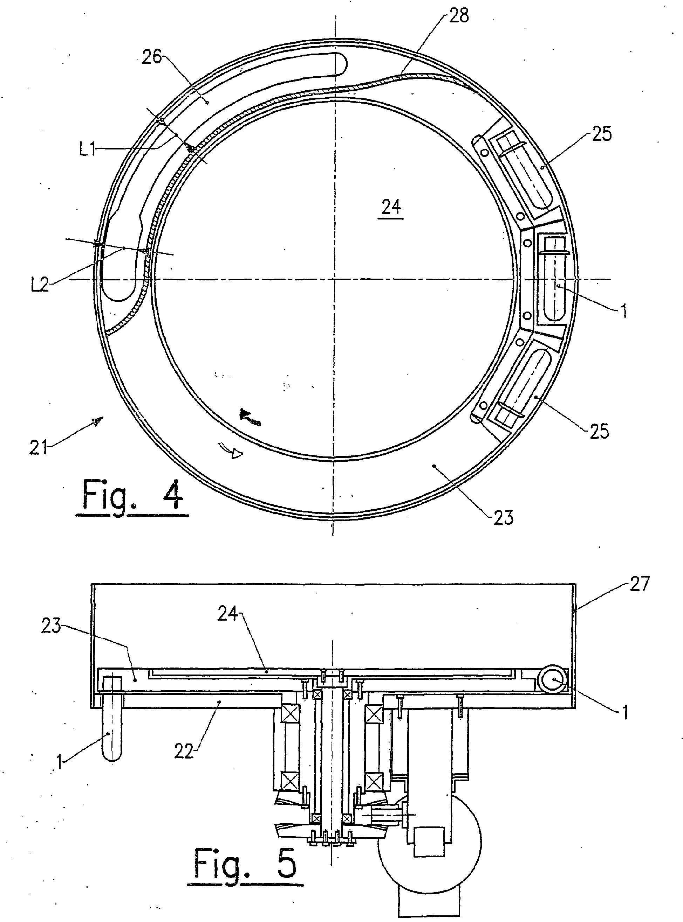

Le dispositif entier est incliné, la fente oblongue décrite ci-dessus étant en partie haute du système (voir Fig. 4).

Enfin un guide 28 est mis en place autour de la rainure oblongue pour éviter toute remontée de préformes dans cette zone.

Le fonctionnement du système est le suivant :

Les préformes 1 en vrac sont versées dans le dispositif en partie basse par un tapis élévateur 11 si le dispositif doit être situé en hauteur.

La régulation du volume de préforme dans le réceptacle se fait avec une détection de niveau qui permet d'actionner le moyen de chargement (11) s'il manque des préformes ou de l'arrêter si il y en a suffisamment. Au niveau de ce point bas que nous considérons comme la zone de chargement, les alvéoles tournant avec le plateau 23 se chargent de préformes, avec au maximum une préforme par alvéole 25 (certaines ne sont pas remplies, mais cela ne nuit en rien au bon fonctionnement du système). A ce point, les préformes sont donc entraînées en rotation par les alvéoles et glissent sur la plaque 22. A ce stade les préformes engagées dans les alvéoles sont toutes parfaitement alignées dans leur longueur et sont soit col en avant, soit col en arrière par rapport à la rotation du plateau.

Quand ces alvéoles arrivent en partie haute et au passage de la rainure oblongue 26, le corps 3 de la préforme bascule (toujours par gravité) dans la rainure et la préforme se retrouve suspendue sous la collerette 4 et poussée par le bord arrière de l'alvéole 25. Que la préforme soit col en avant ou col en arrière ne change en rien le processus de basculement autour d'un axe matérialisé physiquement par la collerette.

Arrivé au niveau où la rainure oblongue devient plus large (L2), le col de la préforme peut alors se dégager et la collerette est reprise par des guides situés sous la plaque de glissement 22 fixe.

Le disque supérieur 24 tournant à contre sens permet d'assurer un bon chargement obligeant les préformes par un mouvement à contre courant à mieux rentrer dans les alvéoles.

Le dispositif est également muni d'un système qui peut être une soufflette et qui est situé en avant de la rainure oblongue afin de repousser toutes les préformes qui ne sont pas correctement positionnées dans les alvéoles. Ce système peut également être entièrement mécanique sous forme d'une roue à ailettes perpendiculaire au mouvement et qui est réglée juste en dessus des alvéoles.

Comparé aux systèmes existants décrits précédemment, le dispositif objet de l'invention présente l'avantage de distinguer deux phases bien distinctes :
- Une phase de pré-orientation ayant pour but de disposer les préformes dans les alvéoles du plateau rotatif, le taux de remplissage de ces alvéoles étant largement favorisé par le "brassage" fait par le disque supérieur tournant à contre sens.
   Il est important de noter que le taux de remplissage des alvéoles est indépendant du niveau de chargement du réceptacle 21 en préformes, le remplissage des alvéoles se faisant par le dessous du tas.
- Une phase finale d'orientation dans laquelle les préformes, positionnées dans leur alvéole, passent au dessus de la rainure oblongue et basculent dans le rail 14 dé sortie.

L'efficacité de cette seconde phase est liée au fait que les préformes positionnées dans les alvéoles sont complètement isolées des autres, et ne subissent donc aucune contrainte au moment du basculement.

Toute préforme engagée dans une alvéole ne peut que basculer et être correctement délivrée dans les rails situés au dessous de la plaque de glissement.

Le principe du plateau à alvéoles permet en outre de ne pas sélectionner un objet constitué de deux préformes emboîtées dans le cas de préformes présentant la particularité de posséder un corps de diamètre extérieur inférieur au diamètre intérieur du col.

Si deux préformes (ou plus!) sont emboîtées en force, elles ne pourront pas se loger dans les alvéoles. Elles seront donc recyclées dans le réceptacle en permanence mais ne viendront pas perturber le fonctionnement général. Si ces préformes sont seulement imbriquées, elles ne seront pas sélectionnées lors du premier passage, seront recyclées dans le réceptacle et se désembriqueront très probablement lors du brassage.

Cet avantage est majeur par rapport aux systèmes traditionnels qui perdent énormément d'efficacité dans ce type de situation. En effet les préformes ainsi emboîtées glissent à plat sur les rouleaux (le centre de gravité de l'ensemble ainsi constitué ne permettant pas le redressement). Le diamètre des collerettes étant la plus part du temps très proche de la hauteur des cols, la roue démêleuse située en bas des rouleaux n'a aucune possibilité de repousser cet ensemble. Celui ci cherche donc à pénétrer dans le rail et se coince inexorablement.

Le système est décrit sous la forme de disque mais peut très bien être imaginé sous la forme d'une chaîne continue munie d'alvéoles avec une partie basse dans laquelle se fait le chargement et une partie haute dans laquelle se fait le déchargement.

Le positionnement des divers éléments constitutifs donne à l'objet de l'invention un maximum d'effets utiles qui n'avaient pas été, à ce jour, obtenus par des dispositifs similaires.

## Revendications

1. Dispositif d'orientation de préformes de bouteilles destinées à passer dans une machine de soufflage, conçu pour équiper une installation de fabrication de bouteilles en matière plastique, notamment en polyéthylène, comprenant d'une part un système mobile incliné comportant des alvéoles (25) déterminées pour contenir chacune une préforme (1) en position couchée, d'autre part une structure plane de glissement, inclinée également, au-dessus de laquelle ce système mobile se déplace, laquelle structure plane est pourvue sur tout son pourtour d'un capotage formant un réceptacle (21) fixe pour les préformes,
**caractérisé en ce que** les préformes comportant une collerette (4) d'un diamètre supérieur à celui de leur corps (3), ladite structure plane est par ailleurs pourvue, en sa partie haute, d'une fente oblongue (26) disposée sous les alvéoles et agencée pour provoquer le basculement des préformes en position verticale avec le col (2) en haut, avant de les faire tomber sur la rampe inclinée (14) d'alimentation de la machine de soufflage, ladite fente oblongue (26) présente une première largeur (L1) inférieure au diamètre de la collerette (4) mais supérieure au diamètre du corps (3) de la préforme (1), de façon à laisser passer le corps de ladite préforme mais pas la collerette, et une seconde largeur (L2) nettement supérieure au diamètre de ladite collerette permettant de laisser passer toute la préforme.

2. Dispositif selon la revendication 1, **se caractérisant par le fait que** le système mobile est constitué d'un plateau rotatif (23) incliné comportant à sa périphérie des alvéoles (25) et tournant au-dessus de la structure plane, laquelle est formée d'une plaque de glissement (22) circulaire également inclinée.

3. Dispositif selon la revendication 2, **se caractérisant par le fait qu'**il comporte, au-dessus du plateau rotatif (23), un disque supérieur (24) de diamètre plus faible tournant en sens inverse de façon à assurer un bon chargement en obligeant les préformes (1), par un mouvement à contre courant, à mieux pénétrer dans les alvéoles (25) du plateau rotatif.

4. Dispositif selon la revendication 1, **se caractérisant par le fait que** la fente oblongue (26) s'étend sur un secteur d'arc d'environ 90°.

5. Dispositif selon la revendication 1, **se caractérisant par le fait qu'**il est constitué d'une chaîne continue munie d'alvéoles (25) avec une partie basse dans laquelle se fait le chargement des préformes (1) et une partie haute dans laquelle se fait le déchargement.

6. Dispositif selon l'une quelconque des revendications précédentes, **se caractérisant par le fait qu'**il comporte un guide (28) disposé autour de la fente oblongue (26) et agencé pour éviter toute remontée des préformes dans cette zone.

7. Dispositif selon l'une quelconque des revendications précédentes, **se caractérisant par le fait qu'**il comporte un système de détection du niveau de chargement du réceptacle (21) permettant d'actionner le moyen de chargement (11) s'il manque des préformes ou de l'arrêter s'il y en a suffisamment.

8. Dispositif selon l'une quelconque des revendications précédentes, **se caractérisant par le fait qu'**il est équipé d'une soufflette située avant la fente oblongue (26) et agencée pour repousser toutes les préformes qui ne sont pas correctement positionnées dans les alvéoles (25).

9. Dispositif selon l'une quelconque des revendications 1 à 7, **se caractérisant par le fait qu'**il est équipé d'une roue à ailettes perpendiculaire au mouvement disposée au-dessus des alvéoles (25) et agencée pour repousser toutes les préformes qui ne sont pas correctement positionnées dans les dites alvéoles.

## Claims

1. Device for orienting bottle preforms aimed to pass in a blowing machine and designed for equipping a plant for manufacturing bottles made of plastic material, particularly polyethylene, and comprising on one hand a mobile slanted system which has pits (25), each one of which is aimed to contain one preform (1) in an horizontal position, and on another hand a plane sliding structure, also being slanted, above which the mobile system moves, such plane structure being equipped on all its circumference with a cover to form a fixed receptacle (21) for the preforms,
**characterised in that** the preforms have a collar (4) whose diameter is greater than their body (3) diameter, said plane structure being further equipped, in its top part, with an oblong slit (26) arranged under the pits and aimed to make the preforms be overturned in a vertical position with their neck (2) oriented upwards, before making them fall on the slanted ramp (14) for supplying the blowing machine, said oblong slit (26) having a first width (L1) which is less than the collar (4) diameter but is greater than the preform (1) body (3) diameter, in order to let the body of said preform pass but not the collar body, and a second width (L2) which is much greater than the diameter of said collar, which allows the whole preform to pass.

2. Device according to claim 1, **characterised in that** the mobile system is composed of a slanted rotating plate (23) equipped with pits (25) on its periphery and rotating above a plane structure composed of a circular sliding plate (22) which is also slanted.

3. Device according to claim 2, **characterised in that** it has, above the rotating disk (23) , an upper disk (24) with a lower diameter which rotates along a contrary direction in order to ensure a correct change of preforms (1) by compelling them, with a counter-current direction, to better penetrate into the rotating disk pits (25).

4. Device according to claim 1, **characterised in that** the oblong slit (26) extends on an arc of about 90°.

5. Device according to claim 1, **characterised in that** it is composed of a continuous chain equipped with pits (25) with a lower part in which the preforms (1) are loaded and an upper part in which the preforms are discharged.

6. Device according to any one of the previous claims, **characterised in that** it has a guide (28) arranged around the oblong slit (26) and adapted to prevent the performs from going back in this area.

7. Device according to any one of the previous claims, **characterised in that** it has a system for detecting the loading level of the receptacle (21) which allows actuating the loading means (11) if preforms are lacking or stopping it if there are enough preforms.

8. Device according to any one of the previous claims, **characterised in that** it is equipped with an air jet placed under the oblong slit (26) and adapted to reject all preforms which are not correctly placed in the pits (25).

9. Device according to any one of claims 1 to 7, **characterised in that** it is equipped with a winged wheel perpendicular to the movement and placed above the pits (25) and adapted to reject all preforms which are not correctly placed in said pits.

## Patentansprüche

1. Vorrichtung zum Ausrichten von Flaschenvorförmlingen, die zu einer Blasmaschinen zugeführt werden sollen, wobei die Vorrichtung zur Ausstattung einer Herstellungsanlage von Kunststoffflaschen, insbesondere aus Polyethylen, geeignet ist und einerseits eine bewegliche geneigte Einrichtung, die Zellen (25) aufweist, die dafür bestimmt sind, jeweils einen Vorförmling (1) in liegender Position aufzunehmen, und andererseits eine ebenfalls geneigte ebene Gleitanordnung umfaßt, über der sich die bewegliche Einrichtung bewegt, wobei die ebene Anordnung über ihren gesamten Umfang mit einer Verkleidung versehen ist, die einen feststehenden Auffang (21) für die Vorförmlinge bildet,
**dadurch gekennzeichnet,**
**daß** die Vorförmlinge einen Flansch (4) mit einem Durchmesser aufweisen, der größer als derjenige des Körpers ist, daß die ebene Anordnung außerdem an ihrem oberen Teil mit einer länglichen Rille (26) versehen ist, die unter den Zellen ausgebildet ist und eingerichtet ist, um das Kippen der Vorförmlinge in vertikaler Position mit den Hals (2) nach oben zu verursachen, bevor sie auf die geneigte Beschickungsrampe (14) der Blasmaschine fallen gelassen werden, wobei die längliche Rille (26) eine erste Breite (L1), die kleiner als der Durchmesser des Flansches (4) aber größer als der Durchmesser des Körpers (3) des Vorförmlings (1) ist, um den Körper des Vorförmlings aber nicht den Flansch durchzulassen, und eine zweite Breite (L2) aufweist, die deutlich größer als der Durchmesser des Flansches ist, um den ganzen Vorförmling durchzulassen.

2. Vorrichtung nach Anspruch 1,
**dadurch gekennzeichnet,**
**daß** die bewegliche Einrichtung aus einer geneigten Drehplattform (23) besteht, die an ihrem Rand Zellen (25) aufweist und sich über der ebenen Anordnung dreht, die als kreisförmige ebenfalls geneigte Gleitplatte (22) ausgebildet ist.

3. Vorrichtung nach Anspruch 2,
**dadurch gekennzeichnet,**
**daß** sie über der Drehplattform (23) eine obere Scheibe (24) mit einem kleineren Durchmesser aufweist, die sich in entgegengesetzter Richtung dreht, um ein gutes Laden zu gewährleisten, indem die Vorförmlinge (1) durch eine Bewegung gegen den Strom veranlaßt werden, besser in die Zellen (25) der Drehplattform einzutreten.

4. Vorrichtung nach Anspruch 1,
**dadurch gekennzeichnet,**
**daß** die längliche Rille (26) sich über einen Bogenabschnitt von ungefähr 90° erstreckt.

5. Vorrichtung nach Anspruch 1,
**dadurch gekennzeichnet,**
**daß** sie eine kontinuierliche Kette, die mit Zellen (25) versehen ist, mit einem unteren Teil, in dem das Laden der Vorförmlinge (1) stattfindet und einem oberen Teil, in dem das Entladen stattfindet, aufweist.

6. Vorrichtung nach einem der vorhergehenden Ansprüche,
**dadurch gekennzeichnet,**
**daß** sie eine Führung (28) aufweist, die um die längliche Rille (26) herum ausgebildet ist und eingerichtet ist, um die Rückkehr der Vorförmlinge in den Bereich zu verhindern.

7. Vorrichtung nach einem der vorhergehenden Ansprüche,
**dadurch gekennzeichnet,**
**daß** sie eine Einrichtung zur Erfassung des Ladeniveaus des Auffangs (21) aufweist, welche ermöglicht, die Ladeneinrichtung (11) zu aktivieren, wenn Vorförmlinge fehlen, oder anzuhalten, wenn es davon genügend gibt.

8. Vorrichtung nach einem der vorhergehenden Ansprüche,
**dadurch gekennzeichnet,**
**daß** sie mit einem Gebläse versehen ist, das sich vor der länglichen Rille (26) befindet, und eingerichtet ist, um alle Vorförmlinge zurückzustoßen, die in den Zellen (25) nicht richtig positioniert sind.

9. Vorrichtung nach einem der Ansprüche 1 bis 7,
**dadurch gekennzeichnet,**
**daß** sie mit einem Schaufelrad versehen ist, das senkrecht zur Bewegung über den Zellen (25) angebracht ist, und eingerichtet ist, um alle Vorförmlinge zurückzustoßen, die in den Zellen nicht richtig positioniert sind.
